# EUROPEAN PATENT SPECIFICATION

(11) **EP 3 385 311 B1**
(45) Date of publication and mention of the grant of the patent: **06.01.2021**
(21) Application number: 16870667.9
(22) Date of filing: 29.11.2016
(51) Int. Cl.: C08J 5/18, B65D 25/52, B65D 65/02, C08K 5/103

(54) **FOOD PACKAGING FILM, AND GIFT-BOXED SMALL ROLL OF FOOD PACKAGING FILM**
LEBENSMITTELVERPACKUNGSFOLIE UND KLEINE ROLLE IM GESCHENKKARTON MIT DER LEBENSMITTELVERPACKUNGSFOLIE
FILM D'EMBALLAGE ALIMENTAIRE, ET PETIT ROULEAU DE FILM D'EMBALLAGE ALIMENTAIRE EMPAQUETÉ

(30) Priority: 30.11.2015 WO PCT/JP2015/083645
(43) Date of publication of application: 10.10.2018
(73) Proprietor: Showa Denko Materials Co., Ltd., Tokyo 100-6606 (JP)
(72) Inventor: MIYATA Hiroyuki, Tokyo 100-6606 (JP)
(74) Representative: Hoffmann Eitle
(86) International application number: PCT/JP2016/085435
(87) International publication number: WO 2017/094730

(56) References cited:
- EP-A1- 1 591 373
- EP-A1- 3 385 310
- JP-A- 2002 012 686
- JP-A- 2002 012 686
- JP-A- 2015 007 198
- JP-A- 2015 007 198
- US-A- 4 042 549

## Description

### Technical Field

The present invention relates to a food wrapping film and an article that is a food wrapping rolled film with a box.

### Background Art

Conventionally, food wrapping films have been widely used commercially in hotels, restaurants, and other such establishments, as well as in the home, during food storage, preparation, and the like. In recent years, a food wrapping film having a thermoplastic resin as a main component and further containing a colorant, such as a copper phthalocyanine colorant, has been proposed to make it easier to see visually whether a piece of the film has become mixed in the food (Patent Literature 1).

On the other hand, it is common to add an anti-fogging agent to the food wrapping film to prevent moisture in the food from adhering to the film as water droplets.

### Citation List

### Patent Literature

[Patent Literature 1] Japanese Unexamined Patent Publication No. 2015-7198

### Summary of Invention

### Technical Problem

According to investigations by the present inventors, it has been found that when a blue colorant is used together with an anti-fogging agent, the blue colorant does not uniformly disperse in the film, and the coloring of the film tends to become uneven.

Therefore, it is an object of the present invention to provide a food wrapping film having excellent dispersibility of the blue colorant, and an article that is a food wrapping rolled film with a box.

### Solution to Problem

The present invention provides a food wrapping film containing a thermoplastic resin, a blue colorant, and a polyglycerol fatty acid ester.

The content of the polyglycerol fatty acid ester is 1.0% by mass or more and 2.5% by mass or less based on the total amount of the film.

The thermoplastic resin may be at least one selected from the group consisting of polyvinyl chloride resins, polyvinylidene chloride resins, and polyolefin resins.

The film may contain, as the thermoplastic resin, 70% by mass or more based on the total amount of the film of at least one resin selected from the group consisting of polyvinyl chloride resins, polyvinylidene chloride resins and polyolefin resins.

The present invention also provides an article including the food wrapping film, a core material on which the food wrapping film is rolled, and a box in which the food wrapping film and the core material are stored, wherein the box is provided with a blade part for cutting the food wrapping film.

### Advantageous Effects of Invention

According to the present invention, it is possible to provide a food wrapping film that has excellent dispersibility of the blue colorant and an article that is a food wrapping rolled film with a box.

### Brief Description of Drawings

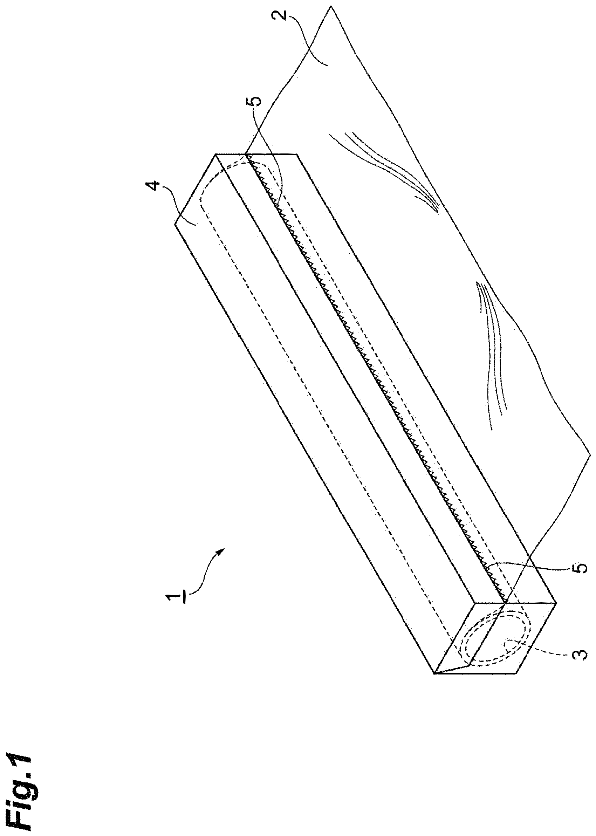

FIG 1 is a schematic view showing a food wrapping rolled film with a box.

### Description of Embodiments

The film according to the present embodiment contains a thermoplastic resin, a blue colorant, and a polyglycerol fatty acid ester, and is preferably used as a food wrapping film.

The thermoplastic resin is a polyvinyl chloride resin, a polyvinylidene chloride resin or a polyolefin resin, and more preferably a polyvinyl chloride resin, a polyvinylidene chloride resin or a polyethylene resin, from the viewpoint of excellent handling property. The thermoplastic resin is preferably a polyvinyl chloride resin from the viewpoint of excellent dispersibility of the blue colorant.

As the polyvinyl chloride resin, a polyvinyl chloride resin having an average degree of polymerization of 700 to 1300 is preferable from the viewpoint of excellent moldability, heat resistance and fluidity of the film. The average polymerization degree in the present specification means an average degree of polymerization measured according to JIS K6720-2.

The polyvinyl chloride resin may be a vinyl chloride homopolymer (polyvinyl chloride resin) from the viewpoint of excellent mechanical properties, or the polyvinyl chloride resin may be a copolymer of a vinyl chloride and other monomer copolymerizable therewith, for the purpose of imparting other properties. The copolymer may be a graft copolymer, a block copolymer or a random copolymer. Examples of the other monomer include olefins such as ethylene, propylene and polybutene; vinyl esters of saturated acids such as vinyl acetate and vinyl laurate; alkyl esters of unsaturated acids such as methyl acrylate and methyl methacrylate; alkyl vinyl ethers such as lauryl vinyl ether; maleic acid, acrylonitrile, styrene, methylstyrene, vinylidene fluoride; and the like. When the polyvinyl chloride resin is a copolymer, the content of the vinyl chloride unit in the copolymer may be 10% by mass or more based on the total amount of monomer units, and is preferably 30% by mass or more and more preferably 50% by mass or more, from the viewpoint of excellent mechanical properties. The upper limit of the content of the vinyl chloride unit in the copolymer is not particularly limited, and may be, for example, 99% by mass or less based on the total amount of monomer units.

The polyvinyl chloride resin may be, for example, a polymer blend with a three-dimensional polymer of acrylonitrile-butadienestyrene or the like, a post-treatment product with an alcohol or the like, or a post-treatment product with a chlorine-containing compound. In these cases, the content of the vinyl chloride unit in the polyvinyl chloride resin may be 10% by mass or more based on the total amount of the resin.

The polyvinylidene chloride resin may be a vinylidene chloride homopolymer (polyvinylidene chloride resin), for example, may be a copolymer containing vinylidene chloride and other monomer copolymerizable with vinylidene chloride as monomer units. The other monomer may be vinyl chloride, an acrylate ester of acrylic acid and an alcohol having 1 to 8 carbon atoms, a methacrylic acid ester of methacrylic acid and an alcohol having 1 to 8 carbon atoms, a vinyl ester of an aliphatic carboxylic acid, an unsaturated aliphatic carboxylic acid, an olefin, a vinyl ether, or the like. The copolymer of vinylidene chloride and vinyl chloride shall belong to the polyvinylidene chloride resin.

The content of the vinylidene chloride unit in the polyvinylidene chloride resin may be, for example, 60% by mass or more, 70% by mass or more, or 80% by mass or more, based on the total amount of monomer units, from the viewpoint of moldability and heat resistance of the film. The upper limit of the content of the vinylidene chloride unit in the polyvinylidene chloride resin is not particularly limited, and may be, for example, 99% by mass or less based on the total amount of monomer units. The content of the vinylidene chloride unit can be measured by a nuclear magnetic resonance (NMR) apparatus.

The weight average molecular weight of the polyvinylidene chloride resin may be, for example, 40,000 to 180,000, 60,000 to 160,000, or 80,000 to 140,000. The weight average molecular weight of the polyvinylidene chloride resin can be measured by GPC method using polystyrene of known molecular weight as a standard substance.

The conditions of the GPC method used for measuring the weight average molecular weight of the polyvinylidene chloride resin are as follows. A gel chromatograph Alliance GPC 2000 model manufactured by Waters Corporation is used as a measuring device. A solution prepared by dissolving a polyvinylidene chloride resin in tetrahydrofuran so as to be 0.5% by weight is used as a sample.
Column: TSKgel GMHHR-H(S) HT 30 cm × 2, TSKgel GMH6-HTL 30 cm × 2 manufactured by Tosoh Corporation
Mobile phase: Tetrahydrofuran
Detector: Differential refractometer
Flow rate: 1.0 mL/min
Column temperature: 20°C
Injection amount: 500 µL

When the thermoplastic resin is a polyvinyl chloride resin or a polyvinylidene chloride resin, the film may further contain a plasticizer. Examples of the plasticizer include epoxidized oils such as epoxidized linseed oil, epoxidized soybean oil and epoxidized fatty acid alkyl ester, adipic acid esters having a linear or branched alkyl group having 6 to 10 carbon atoms, hydroxy polycarboxylic acid esters such as tributyl acetylcitrate and triethyl acetylate, fatty acid group dibasic acid esters such as di-normal butyl sebacate, glycol esters such as pentaerythritol ester and diethylene glycol benzoate, phosphate esters such as triphenyl phosphate and tricresyl phosphate, glycerin diacetomonolaurate, chlorinated paraffin, polyester plasticizers, and the like. These plasticizers are used singly or in combination of two or more. The content of the plasticizer is appropriately adjusted within the range of, for example, 20 to 50 parts by mass, based on 100 parts by mass of the polyvinyl chloride resin, depending on application such as the type of food to be wrapped, wrapping form, and wrapping method.

Examples of the polyolefin resin include polyethylene resins and the like, and the polyethylene resin may be a copolymer using low density polyethylene, linear low density polyethylene, linear ultra low density polyethylene, medium density polyethylene, high density polyethylene, ethylene or the like, as monomer units. Specifically, the polyethylene resin is a copolymer of ethylene and one or more selected from α-olefins having 3 to 10 carbon atoms, such as propylene, 1-butene, 1-pentene, 1-hexene, 4-methyl-1-pentene, 1-heptene and 1-octene, vinyl esters such as vinyl acetate and vinyl propionate, unsaturated carboxylic acid esters such as methyl acrylate, ethyl acrylate, methyl methacrylate and ethyl methacrylate, unsaturated compounds such as conjugated diene and non-conjugated diene; and the like. The content of the ethylene unit in the polyethylene resin may be 50% by mass or more based on the total amount of monomer units.

The content of the thermoplastic resin may be 70% by mass or more or 75% by mass or more, and may be 85% by mass or less or 80% by mass or less, based on the total amount of the film, from the viewpoint of excellent productivity. The content of the polyvinyl chloride resin, the polyvinylidene chloride resin or the polyolefin resin is preferably within the above range, and the content of the polyvinyl chloride resin, the polyvinylidene chloride resin or the polyethylene resin is more preferably within the above range.

The blue colorant is, for example, a colorant having a maximum absorption wavelength in the visible light region (380 to 750 nm) of 600 to 750 nm. The absorbance at the maximum absorption wavelength in the visible light region of the blue colorant is preferably at least 2 times and more preferably at least 3 times the absorbance at 470 nm. Specifically, the blue colorant is copper phthalocyanine (copper phthalocyanine blue), iron(III) hexacyanoferrate(II), cobalt·oxide-aluminum oxide mixture, indigo, or ultramarine. The blue colorant is preferably copper phthalocyanine from the viewpoint of dispersibility.

The content of the blue colorant may be 0.5% by mass or more, and 2.0% by mass or less, based on the total amount of the film.

The polyglycerol fatty acid ester is a compound represented by the following formula (1).

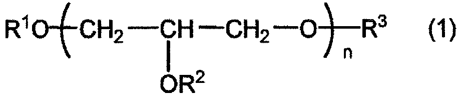

In formula (1), R¹, R², and R³ each independently represent a hydrogen atom or a fatty acid residue (alkylcarbonyl group), and at least one of R¹, R², and R³ represents a fatty acid residue (alkylcarbonyl group). A portion of the fatty acid residue (alkylcarbonyl group) may be substituted with a hydroxyl group or the like. The symbol n represents an integer of 3 or more. A plurality of R²s may be the same as or different from each other. These polyglycerol fatty acid esters may be used alone or in combination of two or more.

The number of carbon atoms of each residue of the fatty acid constituting the polyglycerol fatty acid ester may be independently, for example, 8 to 24. The residue of the fatty acid constituting the polyglycerol fatty acid ester may be a saturated fatty acid or an unsaturated fatty acid. Examples of saturated fatty acids of the residue of the fatty acid constituting the polyglycerol fatty acid ester include caprylic acid, pelargonic acid, capric acid, undecylic acid, lauric acid, tridecylic acid, myristylic acid, pentadecylic acid, palmitic acid, margaric acid, stearic acid, nonadecylic acid, arachidic acid, heneicosylic acid, behenic acid, tricosylic acid, and lignoceric acid. Examples of unsaturated fatty acids of the residue of the fatty acid constituting the polyglycerol fatty acid ester include α-linolenic acid, stearidonic acid, eicosapentaenoic acid, docosapentaenoic acid, docosahexaenoic acid, linoleic acid, γ-linolenic acid, dihomo-γ-linolenic acid, arachidonic acid, docosapentaenoic acid, palmitoleic acid, vaccenic acid, bauric acid, oleic acid, elaidic acid, erucic acid, and nervonic acid. A part of these saturated fatty acids and unsaturated fatty acids may be substituted with hydroxyl groups or the like. Examples of compounds in which a part of the fatty acid is substituted with a hydroxyl group include ricinoleic acid, linoleic acid, linolenic acid, sardine acid, and eleostearic acid.

The symbol n may be an integer from 3 to 20. The polyglycerol fatty acid ester may be a mixture of two or more kinds of polyglycerol fatty acid esters each having a different n.

From the viewpoint of even better dispersibility of the blue colorant, the content of the polyglycerol fatty acid ester is 1.0% by mass or more, and 2.5% by mass or less, based on the total amount of the film.

In addition to the thermoplastic resin, the blue colorant, and the polyglycerol fatty acid ester, the film may further contain other components. Examples of other components include a thermal stabilizer, a light stabilizer, an anti-fogging agent other than the polyglycerol fatty acid ester, a lubricant, a filler, a plate-out inhibitor, an antioxidant, a release agent, a viscosity lowering agent, a surfactant, a coloring agent other than the blue colorant, a fluorescent agent, a surface treatment agent, a crosslinking agent, a processing aid, a pressure-sensitive adhesive, an antistatic agent, an ultraviolet absorber, an antiblocking agent, and the like.

The film may consist of a single layer containing the thermoplastic resin, the blue colorant and the polyglycerol fatty acid ester, or may consist of a plurality of layers. When the film consists of a plurality of layers, the film may include, for example, a first surface layer, an intermediate layer and a second surface layer in this order. In this case, for example, the first and second surface layer may contain the thermoplastic resin and the polyglycerol fatty acid ester, and the intermediate layer may contain the blue colorant. The film may further includes, for example, an adhesive layer containing an acid-modified polyolefin resin or the like in order to improve the adhesion between layers, and a heat resistant layer containing a polyamide resin may be further provided in order to improve the heat resistance of the film. When the thermoplastic resin is a polyvinyl chloride resin, the film preferably consists of a single layer containing a thermoplastic resin (polyvinyl chloride resin), the blue colorant and the polyglycerin fatty acid ester.

The thickness of the film may be preferably 5 µm or more and more preferably 6 µm or more, from the viewpoint of efficiently shielding the food from the outside air, and may be preferably 25 µm or less and more preferably 12 µm or less, from the viewpoint of excellent handling property.

The film is produced by mixing a composition containing a thermoplastic resin, a blue colorant and a polyglycerol fatty acid ester with a mixer such as a V-type blender, a ribbon blender, a Henschel mixer or a super mixer, and further kneading the mixture with a mixing roll, a Banbury mixer or a kneading machine such as a kneader, as necessary, to obtain a composition, followed by extrusion molding, for example. Specifically, the composition is supplied to a hopper of an extruder, and a targeted film is obtained by an inflation method, a T-die method, or the like. Generally, the film is wound while the film is being produced, and the wound film is further rewound (rolled) for each desired length such as 20 m or 50 m, packed in a box (decorative box), thereby forming a product. That is, the film in this embodiment may be in the form of a food wrapping rolled film or in the form of a food wrapping rolled film with a box.

Specifically, as shown in FIG. 1, an article (a food wrapping rolled film) 1 with a box includes a food wrapping film 2, a core material 3 on which the food wrapping film 2 is rolled, and a box 4 in which the food wrapping film 2 and the core material 3 are stored, and the box 4 may be provided with a blade part 5 for cutting the food wrapping film 2. The material of the core material 3 and the box 4 is not particularly limited. From the viewpoint of easily recognizing the color of the film 2 from the outside, at least a part of the box 4 is preferably transparent, or has a hole in such a degree as not to impair the function as a box.

When the film is composed of a plurality of layers, the film can be obtained by putting the constituent raw materials of each layer into separate extruders, melt-extruding them, co-extruding each layer by inflation, T-die method or the like and laminating them. In this case, it is preferable to form the film by directly drawing the molten substance extruded from the T-die while rapidly cooling it with a casting roll or the like.

For the film obtained as above, depending on the purpose such as reduction in thermal shrinkage, natural shrinkage, etc. and suppression of occurrence of width contraction, longitudinal stretching between heating rolls, various heat setting, or heat treatment such as aging may be carried out. For the purpose of imparting and promoting anti-fogging property, antistatic property, tackiness, etc., surface treatment and surface processing such as treatment such as corona treatment and ripening, printing and coating and the like may be carried out.

The film described above is a film through which a wrapped food is visually recognizable from the outside. Further, the film is a film (stretch film) having stretchability (extendablility).

The film according to the present embodiment may be a sorting film for foods used for sorting foods. When using the film according to the present embodiment, two or more types of foods can be sorted into at least two groups according to the type of food. That is, for example, the first food can be wrapped in the film according to the present embodiment and sorted into the first group, while the second food can be wrapped in a film having a color different from that of the film according to the present embodiment or a colorless film and sorted into the second group.

Specifically, for example, when there is a first food containing a first allergic substance and a second food containing a second allergic substance, the first food is sorted into a first group that is a group of foods to be provided to a person having no allergic symptom with the first allergic substance, while the second food is sorted into a second group that is a group of foods to be provided to a person having no allergic symptom with the second allergic substance. In the above example, occurrence of an accident that the first or second allergic substance is provided to a person having an allergic symptom to the allergic substance can be suppressed.

### Examples

Hereinafter, the present invention will be more specifically described based on examples, but the present invention is not limited to the examples.

After charging the thermoplastic resin, blue colorant, anti-fogging agents, and various additives shown in Tables 1 and 2 into a super mixer, the material temperature was raised from normal temperature to 130°C while stirring the mixture. After mixing, the mixture was taken out when cooled down to 70°C to prepare a resin composition. Each resin composition was extruded at a resin temperature of 200°C with a Φ 40 mm single screw extruder (L/D = 20) equipped with a T-die (width 350 mm, gap 0.4 mm) to prepare a film having a thickness of 8 µm. The numerical values in the tables are values in terms of solid content and represent % by mass.
Thermoplastic resin a1: Polyvinyl chloride resin ("TH-1000" manufactured by TAIYO VINYL CORPORATION, average degree of polymerization: 1000)
Thermoplastic resin a2: Polyethylene resin ("Neozex 0234N" manufactured by Prime Polymer Co., Ltd.)
Blue colorant b1: Copper phthalocyanine (copper phthalocyanine blue, "NX-053 blue" manufactured by Dainichiseika Color & Chemicals Mfg. Co., Ltd.)
Anti-fogging agent c1: Polyglycerol fatty acid ester "POEM PR-300" manufactured by RIKEN VITAMIN Co., Ltd., polyglycerol polyricinoleate, mixture in which n in formula (1) is 4 to 6)
Anti-fogging agent c2: Diglycerol fatty acid ester ("O-71-DE" manufactured by RIKEN VITAMIN Co., Ltd., diglycerol oleate)
Anti-fogging agent c3: Glycerol fatty acid ester ("XO-100" manufactured by RIKEN VITAMIN Co., Ltd., glycerin monooleate)
Anti-fogging agent c4: Sorbitan fatty acid ester ("L-250A" manufactured by RIKEN VITAMIN Co., Ltd., sorbitan laurate)
Additive d1: Dioctyl adipate ("SANSO CIZER DOA" manufactured by New Japan Chemical Co., Ltd.)
Additive d2: Epoxidized soybean oil ("Chemicizer SE-100" manufactured by Sanwa Synthetic Chemical Industry Co., Ltd.)
Additive d3: Ca/Zn Stabilizer ("SC-308E" manufactured by ADEKA Corporation)

### (Evaluation of Dispersibility)

Each obtained film was cut into a 20 cm by 20 cm test piece. Dispersibility of the blue colorant was evaluated by visually observing the test piece for presence of shading. The evaluation criteria are as shown below. Dispersibility is good if the evaluation is A, B, or C.
A: No shading on test piece
B: Shading in one area of test piece
C: Shading in two or three areas of test piece
D: Shading in four areas or more of test piece

**[Table 1]**

| | | Example 1 | Example 2 | Example 3 | Example 4 | Example 5 | Example 6 | Example 7 |
|---|---|---|---|---|---|---|---|---|
| Composition (% by mass) | a1 | 75.0 | 75.0 | 75.0 | 75.0 | 75.0 | - | - |
| | a2 | - | - | - | - | - | 97.0 | 98.3 |
| | b1 | 1.0 | 1.0 | 1.0 | 1.0 | 1.0 | 1.0 | 1.0 |
| | c1 | 2.0 | 1.0 | 1.0 | 1.0 | 0.5 | 2.0 | 0.5 |
| | c2 | - | 1.0 | - | - | 0.1 | - | 0.1 |
| | c3 | - | - | 1.0 | - | 0.1 | - | 0.1 |
| | c4 | - | - | - | 1.0 | - | - | - |
| | d1 | 12.0 | 12.0 | 12.0 | 12.0 | 12.0 | - | - |
| | d2 | 9.0 | 9.0 | 9.0 | 9.0 | 10.3 | - | - |
| | d3 | 1.0 | 1.0 | 1.0 | 1.0 | 1.0 | - | - |
| Dispersibility | | A | B | B | B | C | B | C |

**[Table 2]**

| | | Comparative Example 1 | Comparative Example 2 | Comparative Example 3 | Comparative Example 4 |
|---|---|---|---|---|---|
| Composition (% by mass) | al | 75.0 | 77.0 | 77.0 | - |
| | a2 | - | - | - | 98.0 |
| | b1 | 1.0 | 1.0 | 1.0 | 1.0 |
| | c1 | - | - | - | - |
| | c2 | 0.4 | - | - | 0.5 |
| | c3 | 0.4 | 0.6 | - | 0.5 |
| | c4 | 0.2 | 0.6 | 2.0 | - |
| | d1 | 12.0 | 10.0 | 10.0 | - |
| | d2 | 10.0 | 10.0 | 9.0 | - |
| | d3 | 1.0 | 1.0 | 1.0 | - |
| Dispersibility | | D | D | D | D |

### Reference Signs List

1... food wrapping rolled film with a box, 2... food wrapping film, 3... core material, 4... box, 5... blade part.

## Claims

1. A food wrapping film comprising:
a thermoplastic resin;
a blue colorant; and
a polyglycerol fatty acid ester,
wherein a content of the polyglycerol fatty acid ester is 1.0% by mass or more and 2.5% by mass or less based on a total amount of the film,
the thermoplastic resin is at least one selected from the group consisting of polyvinyl chloride resins, polyvinylidene chloride resins and polyolefin resins, and
the blue colorant is at least one selected from the group consisting of copper phthalocyanine, iron(III) hexacyanoferrate(II), cobalt oxide-aluminum oxide mixture, indigo and ultramarine.

2. The food wrapping film according to claim 1, comprising, as the thermoplastic resin, 70% by mass or more based on the total amount of the film of at least one resin selected from the group consisting of polyvinyl chloride resins, polyvinylidene chloride resins and polyolefin resins.

3. An article comprising:
the food wrapping film according to claim 1 or 2;
a core material on which the food wrapping film is rolled; and
a box in which the food wrapping film and the core material are stored,
wherein the box is provided with a blade part for cutting the food wrapping film.

## Patentansprüche

1. Lebensmittelumhüllungsfolie, umfassend:
ein thermoplastisches Harz,
einen blauen Farbstoff und
einen Polyglycerinfettsäureester,
wobei ein Gehalt des Polyglycerinfettsäureesters 1,0 Masse-% oder mehr und 2,5 Masse-% oder weniger, bezogen auf eine Gesamtmenge der Folie, beträgt,
das thermoplastische Harz mindestens eines, ausgewählt aus der Gruppe, bestehend aus Polvinylchloridharzen, Polyvinylidenchloridharzen und Polyolefinharzen, ist und
der blaue Farbstoff mindestens einer, ausgewählt aus der Gruppe, bestehend aus Kupferphthalocyanin, Eisen(III)hexacyanoferrat(II), Kobaltoxid-Aluminiumoxid-Gemisch, Indigo und Ultramarin, ist.

2. Lebensmittelumhüllungsfolie gemäß Anspruch 1, umfassend als thermoplastisches Harz 70 Masse-% oder mehr, bezogen auf die Gesamtmenge der Folie, mindestens eines Harzes, ausgewählt aus der Gruppe, bestehend aus Polyvinylchloridharzen, Polyvinylidenchloridharzen und Polyolefinharzen.

3. Artikel, umfassend:
die Lebensmittelumhüllungsfolie gemäß Anspruch 1 oder 2,
ein Kernmaterial, auf das die Lebensmittelumhüllungsfolie aufgerollt ist, und
ein Behältnis, in dem die Lebensmittelumhüllungsfolie und das Kernmaterial aufbewahrt sind,
wobei das Behältnis mit einem Klingenteil zum Schneiden der Lebensmittelumhüllungsfolie ausgestattet ist.

## Revendications

1. Film d'emballage alimentaire comprenant :
une résine thermoplastique ;
un colorant bleu ; et
un ester d'acide gras de polyglycérol,
dans lequel une teneur en ester d'acide gras de polyglycérol est de 1,0 % en masse ou plus et de 2,5 % en masse ou moins sur la base d'une quantité totale du film,
la résine thermoplastique est au moins une choisie dans le groupe constitué de résines de polychlorure de vinyle, de résines de polychlorure de vinylidène et de résines de polyoléfine, et
le colorant bleu est au moins un choisi dans le groupe constitué par la phtalocyanine de cuivre, l'hexacyanoferrate (II) de fer (III), le mélange oxyde de cobalt-oxyde d'aluminium, l'indigo et l'outremer.

2. Film d'emballage alimentaire selon la revendication 1, comprenant, comme résine thermoplastique, 70% en masse ou plus sur la base de la quantité totale du film d'au moins une résine choisie dans le groupe constitué de résines de polychlorure de vinyle, de résines de polychlorure de vinylidène et de résines de polyoléfine.

3. Article comprenant :
le film d'emballage alimentaire selon la revendication 1 ou 2 ;
un matériau de cœur sur lequel le film d'emballage alimentaire est enroulé ; et
une boîte dans laquelle le film d'emballage alimentaire et le matériau de cœur sont stockés,
dans lequel la boîte est pourvue d'une partie de lame pour couper le film d"emballage alimentaire.
